# EUROPEAN PATENT APPLICATION

(11) **EP 4 001 644 A1**
(43) Date of publication of application: **25.05.2022**
(21) Application number: 20839645.7
(22) Date of filing: 13.07.2020
(51) Int. Cl.: F03G 3/00, H02K 53/00

(54) **SYSTEM FOR POWER GENERATION USING GRAVITY**

(30) Priority: 17.07.2019 ES 201930658
(71) Applicant: Fraile, Fernandez, Antonio, 08030 Barcelona (ES)
(72) Inventor: Fraile, Fernandez, Antonio, 08030 Barcelona (ES)
(74) Representative: Isern Patentes y Marcas S.L.
(86) International application number: PCT/ES2020/000033
(87) International publication number: WO 2021/009392

(57) **Abstract**

The invention relates to a system for power generation using gravity, and it comprises: a plurality of spherical bodies; a platform for storing spherical bodies; a ramp fall system for the spherical bodies to fall by means of gravity; a system for lifting the spherical bodies; an electric power generator; and means for transmitting movement between the ramp fall system and the electric power generator, such that the ramp fall system for the fall of the spherical bodies comprises at least one mechanism of chains, pinions and bolts, which is disposed and positioned longitudinally on the slope of a ramp. In addition, the platform for storing the spherical bodies is arranged on the upper level of the ramp, the mechanism of chains, pinions and bolts being able to receive the spherical bodies individually from the storage platform and position them between the successive bolts, the spherical bodies being disposed on the slope of the ramp at the same time. The chain of the mechanism is able to receive rectilinear movement communicated from the spherical bodies when they fall and roll along the ramp surface. The system for lifting the spherical bodies is able to receive the balls released from the ramp fall system after said spherical bodies have fallen and rolled along the slope of the ramp, and to lift and place the spherical bodies onto the platform for storing the spherical bodies. The movement transmission means are mechanically and simultaneously connected to the ramp fall system and the electric power generator; are able to receive the rotational movement of the pinions of the chain, generated by the falling and rolling of the spherical bodies; and are able to adapt and communicate the rotational movement to the electric generator. The ramp fall system includes a manually or automatically actuated locking mechanism that is able to prevent the movement of the mechanism of chains, pinions and bolts.

## Description

### OBJECT OF THE INVENTION

The object of the present invention application is to register a system for power generation using gravity which incorporates significant innovations and advantages over the techniques used up until now.

More specifically, the invention proposes the development of a system for power generation using gravity which, as a result of its particular arrangement, allows generating a movement connected to the action of gravity and using said movement to generate electric power, and all this without requiring fuel consumption.

### BACKGROUND OF THE INVENTION

Many and varied systems for using energy to obtain electric power are known in the current state of the art.

Despite many of them being extremely useful, all of them, however, require supplying a certain type of fuel, particularly fossil fuel, for their operation, with the environmental drawbacks that this entails.

Progressive and constant increase in power consumption, both locally and globally, is an indisputable fact today.

All this responds to several factors at the same time: demographic growth of the population, access of a larger proportion of the population to new amnesties, and therefore energy demand (washing machines, heating, televisions, etc.), use of services and new technologies that did not exist previously (the Internet, etc.), global increase in industrialisation, etc.

Therefore, there is need to meet the growing energy demand taking place at the domestic and industrial level both locally and globally, and to thereby find a sustainable, limitless, clean production system that is free from waste and residues.

This has led to growing awareness in this regard, both among the society and on the part of public authorities.

In addition to what has been explained above, other than the solutions already existing today, the pressing need for new energy alternatives under study which are fully compatible with sustainable environmental development and do not entail an environmental burden for future generations, in addition to entailing considerable economic savings in energy consumption, should also be added.

It should be mentioned that, although there can be found on the market many types and models of electric power-generating apparatus and devices which use different physical principles to actuate a mechanism which produces a movement from which the rotation of a shaft is used to transform it into electric power, the existence of a system that has technical, structural, and constitutive features similar to those herein claimed, or using a method similar to the one described, is unheard of.

The present invention contributes to solving and providing an answer to the present problems as it allows generating a movement connected to the action of gravity and using said movement to generate electric power, and all this without requiring fuel consumption.

### DESCRIPTION OF THE INVENTION

The present invention has been developed for the purpose of providing a system for power generation using gravity, which is essentially characterised in that it comprises a plurality of spherical bodies, a storage platform for storing the spherical bodies, a ramp fall system for the spherical bodies to fall by means of gravity, a lifting system for lifting the spherical bodies, an electric power generator, movement transmission means for transmitting movement between the ramp fall system and the electric power generator.

The ramp fall system for the fall of the spherical bodies comprises at least one mechanism of chains, pinions and bolts which is disposed and positioned longitudinally on the slope of a ramp and the storage platform for storing the spherical bodies furthermore being disposed on the upper level of said ramp, and the same mechanism of chains, pinions and bolts being able to receive the spherical bodies individually from the storage platform and position them between the successive bolts and the spherical bodies being disposed on the slope of the ramp at the same time, and the same mechanism being able to receive rectilinear movement in the chain communicated from the spherical bodies when they fall and roll along the slope of the ramp.

The lifting system for lifting the spherical bodies is able to receive the balls released from the ramp fall system after said spherical bodies have fallen and rolled along the slope of the ramp, and able to lift and place the same spherical bodies on the storage platform for storing the spherical bodies.

The movement transmission means mechanically and simultaneously connected to the ramp fall system and the electric power generator are able to receive the rotational movement of the pinions of the chain generated by the falling and rolling of the spherical bodies, and to adapt and communicate said rotational movement to the electric generator, the ramp fall system incorporating a manually or automatically actuated locking mechanism that is able to prevent the movement of the mechanism of chains, pinions and bolts.

According to another aspect of the invention, the ramp fall system for the fall of the spherical bodies comprises at least one mechanism of chains, pinions and bolts, with the ramp, on which each mechanism is disposed, being made up of guide-like longitudinal profiles on which the spherical bodies can roll by means of gravity; each mechanism being provided with a pair of chains arranged symmetrically with respect to one another and extending along the length of the profiles, the chains being connected to one another by bolts such that the movement of each chain is integral, and with each chain meshing with a rolling pinion disposed at each end of the profiles.

Furthermore, the system for power generation using gravity of the invention has a plurality of mechanisms of chains, pinions and bolts, said mechanisms of chains, pinions and bolts being grouped and positioned in pairs; the pinion of a chain which is disposed at the upper end of the profile of the ramp being connected by means of a secondary shaft with another pinion of the other corresponding mechanism of the same pair, the movement of both pinions thereby being integral with one another; each secondary shaft being mechanically communicated in the rotation thereof, in a specific ratio of rotation, with one and the same main shaft, which is in turn mechanically connected to the movement transmission means.

In turn, in the system for power generation using gravity of the invention, the lifting system for lifting the spherical bodies is disposed on an independent mobile structure, and incorporates a base where the spherical bodies are placed and lifting means for lifting the base which are capable of lifting and lowering said base between the upper level and the lower level determined by the ramp; it also incorporates a weight sensor for detecting the weight of the spherical bodies placed in the base, said weight sensor being connected in data communication with the lifting means; it also incorporates a cushioning system adapted to the impact of the spherical bodies; the base being able to receive the spherical bodies after they have fallen and rolled along the slope of the ramp when it is on the lower level determined by the ramp; the same base being able to transfer the same spherical bodies to the storage platform for storing the spherical bodies when it is on the upper level determined by the ramp.

In turn, the storage platform for storing the spherical bodies is fixed with respect to the ground and has a parallelogrammatic geometry with 4 m x 2 m proportions; it has a variable inclination measured from the region thereof for receiving the spherical bodies from the lifting system to the other region thereof for delivering the same spherical bodies to the ramp fall system for the fall of the balls; it also has one and the same inclination towards the left and right with respect to the direction in which the spherical bodies exit to the ramps.

Additionally, in the system for power generation using gravity, the movement transmission means for transmitting movement between the ramp fall system and the electric power generator are mechanically connected in the rotation thereof with the main shaft and with a specific ratio of rotation.

Alternatively, in the system for power generation using gravity, the ratio of rotation with the main shaft is 1 to 1500.

Alternatively, in the system for power generation using gravity, the ratio of rotation of each secondary shaft with the main shaft is 1 to 3.5.

Additionally, in the system for power generation using gravity, the movement transmission means for transmitting movement between the ramp fall system and the electric power generator comprise a set of gears.

Additionally, in the system for power generation using gravity, the movement transmission means for transmitting movement between the ramp fall system and the electric power generator comprise a set of pulleys, pinions and belts.

Alternatively, in the system for power generation using gravity, the mentioned inclinations are 2%.

Alternatively, in the system for power generation using gravity, each mechanism of chains, pinions and bolts, comprises 33 bolts.

Alternatively, in the system for power generation using gravity, the spherical bodies are made of steel with a lead-filled interior having an outer diameter of 180 mm and a weight of 38 kg.

Preferably, in the system for power generation using gravity, the profiles making up the ramps have a slope inclination comprised in a range of 60-85%.

Additionally, the system for power generation using gravity incorporates a channelling track which is supported on the ground and disposed between the ramp fall system and the lifting system, and is capable of channelling the spherical bodies coming from each mechanism of chains, pinions and bolts to the lifting system, having for such purpose an inclination of 2%, and said channelling track having a passage barrier before the lifting system, disposed such that it can retain the spherical bodies coming from the ramp fall system before they enter the lifting system.

Preferably, the system for power generation using gravity incorporates a gateway disposed over the ramp fall system, and is capable of channelling the spherical bodies coming from the base to the storage platform.

Preferably, the system for power generation using gravity incorporates a mechanism for tensioning the mechanism of chains, pinions and bolts.

Alternatively, the system for power generation using gravity incorporates electric current accumulation means.

As a result of the present invention, a movement connected to the action of gravity is successfully generated and said movement is used to generate electric power, and all this without requiring the consumption of additional fuel given that the system itself, after unblocking the movement of the spherical bodies, generates sufficient current which will allow powering the lifting system and providing electric current to power electrical devices external to the system of the invention.

Other features and advantages of the system for power generation using gravity will become apparent from the description of a preferred but not exclusive embodiment illustrated by way of non-limiting example in the attached drawings, in which:

### BRIEF DESCRIPTION OF THE DRAWINGS

Figures 1 and 4 are schematic views indicating the operation of a preferred embodiment of the system for power generation using gravity of the present invention.
Figure 2 is a schematic view of an enlarged detail of Figure 1.
Figure 3 is a schematic view of the transmission of rotational movement from ramp fall system to the transmission means.
Figure 5 is a schematic view corresponding to a preferred embodiment of the transmission means.

### DESCRIPTION OF A PREFERRED EMBODIMENT

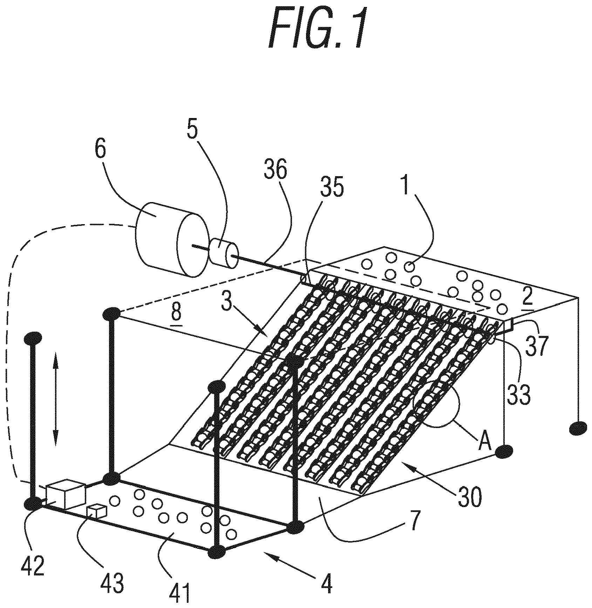

As schematically shown in Figure 1, the system for power generation using gravity of the proposed invention comprises a plurality of spherical bodies 1, a storage platform 2 for storing the spherical bodies, a ramp fall system 3 for the balls 1 to fall by means of gravity, a lifting system 4 for lifting the spherical bodies 1, an electric power generator 6, and movement transmission means 5 for transmitting movement between the ramp fall system 3 and the electric power generator 6.

In turn, the ramp fall system 3 for the fall of the spherical bodies 1 has a plurality of mechanisms 30 of chains, pinions and bolts. Each mechanism 30 is disposed and positioned longitudinally on the slope of a ramp which is made up of profiles 34, the storage platform 2 for storing the spherical bodies 1 being furthermore fixed on the ground and disposed on the upper level of said ramp.

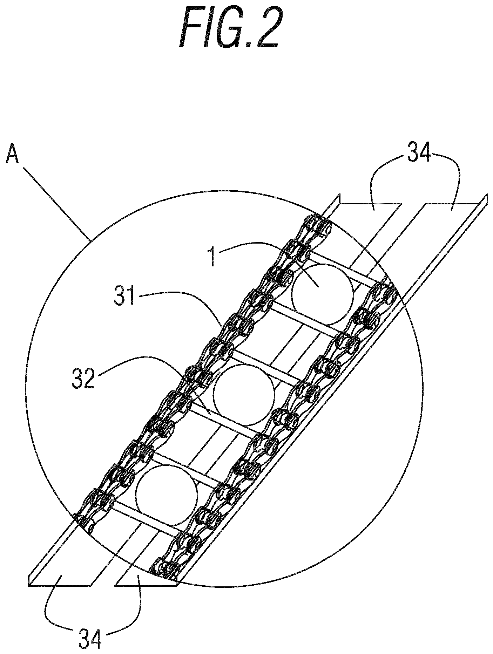

As can be seen in Figure 1 and the enlarged detail A of Figure 2, each mechanism 30 is provided with a pair of chains 31 arranged symmetrically with respect to one another and extending along the length of the ramp, the chains 31 being connected to one another by bolts 32 such that the movement of each chain 31 is integral, and with each chain 31 meshing with a rolling pinion 33 disposed at each end of the ramp, i.e., of the profiles 34, and therefore at different heights. In this preferred embodiment, each pair of chains 31 incorporates 33 bolts 32.

The same mechanism 30 of chains, pinions and bolts is able to receive the spherical bodies 1 individually from the mentioned storage platform 2, as well as position them between the successive bolts 32 of the chains 31, and the spherical bodies 1 are disposed at the same time on the slope of the ramp formed by profiles 34, as can be seen in enlarged detail A of Figure 2.

The ramp on which each mechanism 30 of each pair is disposed is made up of guide-like longitudinal profiles 34 on which the spherical bodies 1 can roll by means of gravity. In enlarged detail A of Figure 2, said profiles 34 are depicted in a mechanism 30 of chains, pinions and bolts. Each of the ramps, i.e., the profiles 34, has a slope inclination comprised in a range of 60-85%, more specifically 80%.

In this preferred embodiment, and for the excellent performance thereof, each of the spherical bodies 1 are made of steel with a lead-filled interior having an outer diameter of 180 mm and a weight of 38 kg. Likewise, an arrangement of 15 spherical bodies, 1 in each mechanism 30 of chains, pinions and bolts. is optimal for the proper operation of the system for power generation using gravity of the invention.

The slope of the ramp causes the spherical bodies 1 to roll down the same ramp by means of gravity, and this means that with the spherical bodies 1 in turn being disposed between the bolts 32, the chain 31 receives a rectilinear movement from the same spherical bodies 1, which entails the rotation of the pinions 33 thereof, as can be deduced from Figures 1 and 2.

Each secondary shaft 35 of each pair of mechanisms of chains, pinions and bolts is mechanically connected in the rotation thereof, in a ratio of rotation of 1 to 3.5, with one and the same main shaft 36, said main shaft 36 in turn being positioned by means of bearings in the storage platform 2 for storing the spherical bodies 1.

The system for power generation using gravity of the invention incorporates a mechanism for tensioning the mechanism 30 of chains, pinions and bolts which provides the required tension to the chains 31 so that they maintain a suitable linearity during the movement thereof received from the spherical bodies 1 through the bolts 32.

The system for power generation using gravity of the invention incorporates a channelling track 7 supported on the ground, which is disposed between the ramp fall system 3 and the lifting system 4, and is capable of channelling the spherical bodies 1 coming from each mechanism 30 of chains, pinions and bolts to the lifting system 4, having for such purpose an inclination of 2%, and with a funnel-like channelling geometry for channelling the spherical bodies 1 from the ramp fall system 3 to the lifting system 4.

The channelling track has a passage barrier before the lifting system 4, disposed such that it can retain the spherical bodies 1 coming from the ramp fall system 3 before they enter the lifting system 4.

In turn, the lifting system 4 for lifting the spherical bodies 1 is disposed on an independent mobile structure, and is able to receive, at the same time, the spherical bodies 1 released from the ramp fall system 3 after said spherical bodies 1 have fallen and rolled along the slope of the ramp. This lifting system 4 may comprise a platform lifting element that is commercially available so it will not be described in detail.

Like a forklift, the same lifting system 4 for lifting the spherical bodies 1 is able to lift and place the spherical bodies 1 onto the storage platform 2 for storing the spherical bodies 1. The spherical bodies 1 reach the lifting system 4, rolling by gravity through the channelling track 7.

The lifting system 4 incorporates a base 41. The spherical bodies 1 collected from the ramp are placed in said base 41.

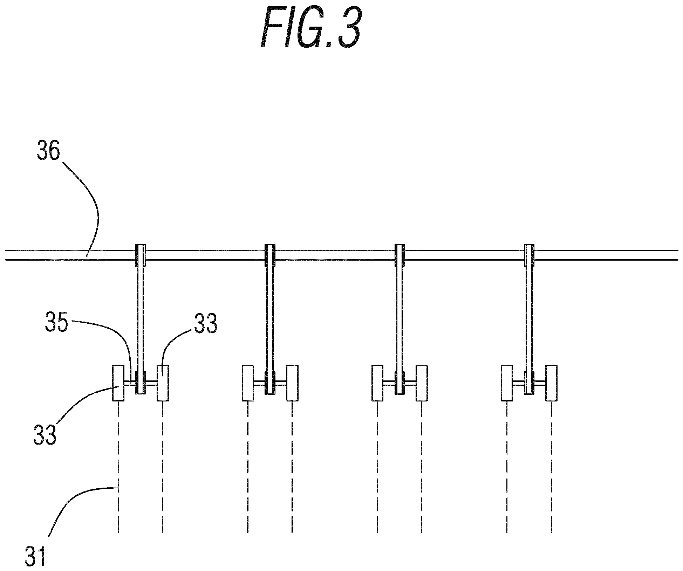

It also incorporates lifting means for lifting the base 41 which are capable of lifting and lowering said base 41 between the upper level and the lower level determined by the ramp, and as indicated by the arrows of Figure 1. Such lifting means can comprise a plurality of vertically disposed guiding profiles and an electric motor 42 governed by a control unit, the electric current supply source of this motor being electrically connected with the generator 6 by means of electrical connections (depicted by means of discontinuous lines in Figures 1 and 3).

Figure 1 shows the base 41 of the lifting system 4 on the lower level of the ramp, receiving the spherical bodies 1.

In that sense, the lifting system 4 for lifting the balls 1 also incorporates a weight sensor 43 for detecting the weight of the spherical bodies 1 placed in the base 41 thereof. Said weight sensor 43 is connected in data communication with the mentioned lifting means, so when the base 1 already receives a specific weight according to the amount of spherical bodies 1 received, the lifting means lift the base 1 from the lower level to the upper level of the ramp.

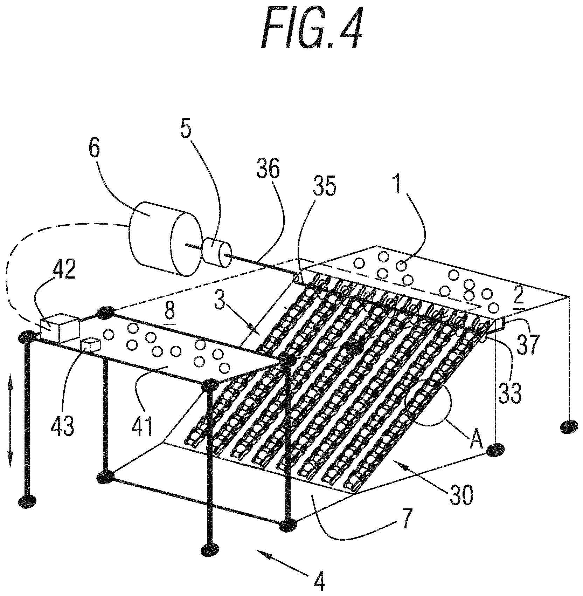

Figure 4 shows the base 41 of the lifting system 4 on the upper level of the ramp, and delivering the spherical bodies 1 to the storage platform 2.

The lifting system 4 for lifting the spherical bodies 1 also incorporates a cushioning system to reduce the effect of the impact of the spherical bodies 1 as they reach the base 41.

In turn, the base 41 is able to receive the spherical bodies 1 after they have fallen and rolled along the slope of the ramp when it is on the lower level determined by the ramp, as schematically depicted in Figure 1, and also to transfer the balls 1 to the storage platform 2 for storing the spherical bodies 1 when it is on the upper level determined by the same ramp, as also schematically depicted in Figure 4.

To transfer the spherical bodies 1 from the base 41 to the storage platform 2, a gateway 8 disposed over the ramp fall system 3 and depicted with dashed lines in Figures 1 and 3 is provided to that end.

The storage platform 2 has a parallelogrammatic geometry measuring 4 m x 2 m, with an inclination of 2% towards the ramp fall system 3, to allow the passage of the spherical bodies 1 to the ramp fall system 3. Nevertheless, said inclination may be variable and adjustable according to specific operation needs, for example, between 2% and 5%.

At the same time, it also has one and the same inclination of 2% towards left and right with respect to the direction in which the spherical bodies 1 exit to the ramps.

In turn, the movement transmission means 5 are mechanically and simultaneously connected to the ramp fall system 3 and the electric power generator 6, and are able to receive the rotational movement of the pinions 33 of the chain 31 generated by the falling and rolling of the spherical bodies 1, and to adapt and communicate said rotational movement to the electric generator 6 by means of a transmission shaft 37.

In relation to the foregoing, the movement transmission means 5 are mechanically connected in the rotation thereof with the aforementioned main shaft 36, and with a ratio of rotation of 1 to 1500.

The mentioned movement transmission means 5 for transmitting movement between the ramp fall system 3 and the electric power generator 6 may comprise a set of gears, and in other preferred embodiments may comprise a set of pulleys, pinions and toothed belts due to their properties of being silent, as can be schematically seen in Figure 4.

The ramp fall system 3 incorporates a manually or automatically actuated locking mechanism 37 that is able to prevent the movement of the mechanism 30 of chains, pinions and bolts.

In the operation of the system for power generation using gravity of the invention, spherical bodies 1 must be initially loaded in the storage platform 2, and to that end, the movement of the mechanisms 30 of chains, pinions and bolts must furthermore be blocked by means of the aforementioned locking mechanism 37, to thereby allow spherical bodies 1 to be loaded in the storage platform 2 without the spherical bodies 1 moving out through the mechanism 30 of chains, pinions and bolts.

After enough spherical bodies 1 have accumulated in the storage platform 2, said locking mechanism 37 is unblocked, the balls 1 moving out through the mechanisms 30 of chains, pinions and bolts and the system for power generation using gravity of the invention then starting to work in the manner explained above.

The system for power generation using gravity of the invention incorporates electric current accumulation means, for example, a battery, which is electrically connected to the lifting system 4. This can be useful to provide the power required for starting the operation of the lifting system 4.

An extremely useful advantage of the system for power generation using gravity of the invention can be, for example, the use thereof in a service for generating electric power in the same way as is normally provided by a generator set.

The details, shapes, dimensions and other secondary elements, as well as the materials used in manufacturing the system for power generation using gravity of the invention, may be suitably replaced with others that are technically equivalent and do not depart from the essential nature of the invention or from the scope defined by the claims included below.

## Claims

1. A system for power generation using gravity, **characterised in that** it comprises a plurality of spherical bodies (1), a storage platform (2) for storing the spherical bodies (1), a ramp fall system (3) for the spherical bodies (1) to fall by means of gravity, a lifting system (4) for lifting the spherical bodies (1), an electric power generator (6), movement transmission means (5) for transmitting movement between the ramp fall system (3) and the electric power generator (6); such that the ramp fall system (3) for the fall of the spherical bodies (1) comprises at least one mechanism (30) of chains, pinions and bolts which is disposed and positioned longitudinally on the slope of a ramp and the storage platform (2) for storing the spherical bodies (1) furthermore being disposed on the upper level of said ramp, and the same mechanism (30) of chains, pinions and bolts being able to receive the spherical bodies (1) individually from the storage platform (2) and position them between the successive bolts and the spherical bodies (1) being disposed on the slope of the ramp at the same time, and the same mechanism (30) being able to receive rectilinear movement in the chain communicated from the spherical bodies (1) when they fall and roll along the slope of the ramp; the lifting system (4) for lifting the spherical bodies (1) being able to receive the balls (1) released from the ramp fall system (3) after said spherical bodies (1) have fallen and rolled along the slope of the ramp, and able to lift and place the same spherical bodies (1) on the storage platform (2) for storing the spherical bodies (1); the movement transmission means (5) being mechanically and simultaneously connected to the ramp fall system (3) and the electric power generator (6), and able to receive the rotational movement of the pinions of the chain generated by the falling and rolling of the spherical bodies (1), and to adapt and communicate said rotational movement to the electric generator (6); the ramp fall system (3) incorporating a manually or automatically actuated locking mechanism (37) that is able to prevent the movement of the mechanism (30) of chains, pinions and bolts.

2. The system for power generation using gravity according to claim 1, **characterised in that** the ramp fall system (3) for the fall of the spherical bodies comprises at least one mechanism (30) of chains, pinions and bolts, with the ramp, on which each mechanism (30) is disposed, being made up of guide-like longitudinal profiles (34) on which the spherical bodies (1) can roll by means of gravity; each mechanism (30) being provided with a pair of chains (31) arranged symmetrically with respect to one another and extending along the length of the profiles (34), the chains (31) being connected to one another by bolts (32) such that the movement of each chain (31) is integral, and with each chain (31) meshing with a rolling pinion (33) disposed at each end of the profiles (34).

3. The system for power generation using gravity according to claim 2, **characterised in that** it has a plurality of mechanisms (30) of chains, pinions and bolts, said mechanisms (30) of chains, pinions and bolts being grouped and positioned in pairs; the pinion (33) of a chain (31) which is disposed at the upper end of the profile (34) of the ramp being connected by means of a secondary shaft (35) with another pinion (33) of the other corresponding mechanism (30) of the same pair, the movement of both pinions (33) thereby being integral with one another; each secondary shaft (35) being mechanically communicated in the rotation thereof, in a specific ratio of rotation, with one and the same main shaft (36), which is in turn mechanically connected to the movement transmission means (5).

4. The system for power generation using gravity according to claim 1 or 2 or 3, **characterised in that** the lifting system (4) for lifting the spherical bodies (1) is disposed on an independent mobile structure, and incorporates a base (41) where the spherical bodies (1) are placed and lifting means for lifting the base (41) which are capable of lifting and lowering said base (41) between the upper level and the lower level determined by the ramp; it also incorporates a weight sensor (43) for detecting the weight of the spherical bodies (1) placed in the base (41), said weight sensor (43) being connected in data communication with the lifting means; it also incorporates a cushioning system adapted to the impact of the spherical bodies (1); the base (41) being able to receive the spherical bodies (1) after they have fallen and rolled along the slope of the ramp when it is on the lower level determined by the ramp; the same base (41) being able to transfer the same spherical bodies (1) to the storage platform (2) for storing the spherical bodies (1) when it is on the upper level determined by the ramp.

5. The system for power generation using gravity according to claim 1 or 2 or 3 or 4, **characterised in that** the storage platform (2) for storing the spherical bodies (1) is fixed with respect to the ground and has a parallelogrammatic geometry with 4 m x 2 m proportions; it has a variable inclination measured from the region thereof for receiving the spherical bodies (1) from the lifting system (4) to the other region thereof for delivering the same spherical bodies (1) to the ramp fall system (3) for the fall of the balls (1); it also has one and the same inclination towards the left and right with respect to the direction in which the spherical bodies (1) exit to the ramps.

6. The system for power generation using gravity according to claim 4 or 5 when they depend on claim 3, **characterised in that** the movement transmission means (5) for transmitting movement between the ramp fall system (3) and the electric power generator (6) are mechanically connected in the rotation thereof with the main shaft (36) and with a specific ratio of rotation.

7. The system for power generation using gravity according to claim 6, **characterised in that** the ratio of rotation with the main shaft (36) is 1 to 1500.

8. The system for power generation using gravity according to claim 3, **characterised in that** the ratio of rotation of each secondary shaft (35) with the main shaft (36) is 1 to 3.5.

9. The system for power generation using gravity according to any of the preceding claims, **characterised in that** the movement transmission means (5) for transmitting movement between the ramp fall system (3) and the electric power generator (6) comprise a set of gears.

10. The system for power generation using gravity according to any of claims 1 to 8, **characterised in that** the movement transmission means (5) for transmitting movement between the ramp fall system (3) and the electric power generator (6) comprise a set of pulleys, pinions and belts.

11. The system for power generation using gravity according to claim 5, **characterised in that** the mentioned inclinations are 2%.

12. The system for power generation using gravity according to claim 3, **characterised in that** each mechanism (30) of chains, pinions and bolts comprises 33 bolts (32).

13. The system for power generation using gravity according to any of the preceding claims, **characterised in that** the spherical bodies (1) are made of steel with a lead-filled interior having an outer diameter of 180 mm and a weight of 38 kg.

14. The system for power generation using gravity according to claim 2, **characterised in that** the profiles (34) making up the ramps have a slope inclination comprised in a range of 60-85%.

15. The system for power generation using gravity according to claim 4, **characterised in that** it incorporates a channelling track (7) which is supported on the ground and disposed between the ramp fall system (3) and the lifting system (4), and is capable of channelling the spherical bodies (1) coming from each mechanism (30) of chains, pinions and bolts to the lifting system (4), having for such purpose an inclination of 2%, and said channelling track (7) having a passage barrier before the lifting system (4), disposed such that it can retain the spherical bodies (1) coming from the ramp fall system (3) before they enter the lifting system (4).

16. The system for power generation using gravity according to claim 4, **characterised in that** it incorporates a gateway (8) disposed over the ramp fall system (3) and is capable of channelling the spherical bodies (1) coming from the base (41) to the storage platform (2).

17. The system for power generation using gravity according to any of the preceding claims, **characterised in that** it incorporates a mechanism for tensioning the mechanism (30) of chains, pinions and bolts.

18. The system for power generation using gravity according to any of the preceding claims, **characterised in that** it incorporates electric current accumulation means.
